# EUROPEAN PATENT APPLICATION

(11) **EP 4 407 731 A1**
(43) Date of publication of application: **31.07.2024**
(21) Application number: 22948481.1
(22) Date of filing: 30.06.2022
(51) Int. Cl.: H01M 10/052

(54) **BATTERY CELL, BATTERY, AND ELECTRIC DEVICE**

(71) Applicant: Contemporary Amperex Technology Co., Limited, Ningde, Fujian 352100 (CN)
(72) Inventor: CHEN, Wenwei, Ningde, Fujian 352100 (CN); LIU, Jiang, Ningde, Fujian 352100 (CN); HUANG, Ying, Ningde, Fujian 352100 (CN); LI, Quankun, Ningde, Fujian 352100 (CN)
(74) Representative: Ran, Handong
(86) International application number: PCT/CN2022/102718
(87) International publication number: WO 2024/000369

(57) **Abstract**

Embodiments of the present application provide a battery cell, a battery, and an electric device. The performance of a battery can be effectively improved with relatively low process complexity. The battery cell comprises: at least two electrode assemblies (21); a lithium supplementing device (22), provided between two adjacent electrode assemblies (21) in the at least two electrode assemblies (21); a housing, used for accommodating the at least two electrode assemblies (21), the housing comprising a first wall, and a lithium supplementing electrode terminal (241) being provided on the first wall; and a connecting member (23), used for electrically connecting the lithium supplementing device (22) and the lithium supplementing electrode terminal (241).

## Description

### Technical Field

The present application relates to the technical field of batteries, in particular to a battery cell, a battery and an electrical apparatus.

### Background

Energy conservation and emission reduction are the key to the sustainable development of the automobile industry. In this case, due to the advantages of energy conservation and environment protection, electric vehicles have become an important part of the sustainable development of the automobile industry. The battery technology is an important factor related to the development of electric vehicles.

In the development of the battery technology, the performance of batteries is an issue that cannot be ignored. The performance of batteries not only affects the development and application of battery-related products, but also affects the acceptance of consumers for electric vehicles. Therefore, how to improve the performance of batteries is an urgent problem to be solved.

### Summary of the Invention

Embodiments of the present application provide a battery cell, a battery and an electrical apparatus, which can effectively improve the performance of batteries with low process complexity.

According to a first aspect, a battery cell is provided, including: at least two electrode assemblies; a lithium-supplementing apparatus arranged between two adjacent electrode assemblies in the at least two electrode assemblies; a shell configured to accommodate the at least two electrode assemblies, the shell including a first wall, and the first wall being provided with a lithium-supplementing electrode terminal; and a connecting element configured to electrically connect the lithium-supplementing apparatus with the lithium-supplementing electrode terminal.

In the embodiment of the present application, the battery cell includes the lithium-supplementing apparatus, thus the lithium-supplementing apparatus can not only supplement the loss of active lithium during the use of the battery including the battery cell to prolong the service life of the battery, but also supplement the loss of active lithium during the first charging process of the battery to increase the energy density of the battery. Further, in the embodiment of the present application, the lithium-supplementing apparatus and the lithium-supplementing electrode terminal are electrically connected through the connecting element to achieve the purpose of supplementing lithium by the lithium-supplementing apparatus. The implementation is simple, and the process complexity is effectively reduced.

In some possible implementations, a surface of each of the at least two electrode assemblies includes a plane part, and the plane parts of the two adjacent electrode assemblies are opposite and connected; and the lithium-supplementing apparatus and at least a part of the connecting element are arranged between the plane parts of the two adjacent electrode assemblies.

In the above technical solution, on the one hand, the electrode assembly includes the plane part, better contact can be formed between planes, and the space of the battery cell can also be better utilized, thus increasing the energy density of the battery; and on the other hand, the lithium-supplementing apparatus and at least a part of the connecting element are arranged between the plane parts of the two adjacent electrode assemblies, thus increasing the contact area between the lithium-supplementing apparatus as well as the connecting element and the electrode assembly, and improving the lithium-supplementing effect of the lithium-supplementing apparatus.

In some possible implementations, the plane part is a side surface with a maximum area in each electrode assembly.

In the above technical solution, the lithium-supplementing apparatus and at least a part of the connecting element are arranged on the side surface with the maximum area in the electrode assembly. On the one hand, the contact area between the lithium-supplementing apparatus as well as the connecting element and the electrode assembly can be further increased, thus improving the lithium-supplementing effect of the lithium-supplementing apparatus; and on the other hand, because the expansion force of the side surface with the maximum area during the expansion of the electrode assembly is maximum, when the battery is charged and the electrode assembly expands, the problem of failure to supplement lithium by the lithium-supplementing apparatus because a passage is not formed between the lithium-supplementing apparatus and the connecting element due to the fact that the lithium-supplementing apparatus and the connecting element are not compacted caused by an insufficient expansion force between the two adjacent electrode assemblies can be avoided.

In some possible implementations, the lithium-supplementing apparatus covers the plane part.

In the above technical solution, the lithium-supplementing apparatus covers the plane part, and at this time, the size of the lithium-supplementing apparatus can reach the maximum, thus effectively improving the lithium-supplementing effect of the lithium-supplementing apparatus, and avoiding the problem of loss of the lithium-supplementing ability due to faults of the lithium-supplementing apparatus in the lithium-supplementing process.

In some possible implementations, the lithium-supplementing apparatus includes a conductive assembly and a lithium-supplementing agent, and the lithium-supplementing agent is arranged on an inner side of the conductive assembly; and the connecting element is configured to electrically connect the conductive assembly with the lithium-supplementing electrode terminal.

In the above technical solution, the conductive assembly can provide an electronic channel for the lithium-supplementing apparatus. The main function of the lithium-supplementing agent is loss of electrons in metallic elemental lithium, so as to form lithium ions. Electrons reach the positive electrode or negative electrode of the battery through the conductive assembly, a positive electrode active material or negative electrode active material obtains the electrons to be reduced, and simultaneously, lithium ions can undergo an intercalation reaction at the positive electrode or negative electrode through an ion channel provided by an electrolyte solution, thus achieving the purpose of transferring active lithium from the lithium-supplementing agent to the positive electrode active material or negative electrode active material to effectively ensure the lithium-supplementing effect. Further, the conductive assembly can also replace a protective adhesive on a surface of a traditional electrode assembly, which can not only reduce the cost of the battery cell, but also reduce the size of the battery cell along the width direction of the electrode assembly.

In some possible implementations, the material of the conductive assembly is plastic cement.

In the above technical solution, the material of the conductive assembly is the plastic cement. Because the plastic cement is softer and thinner, during the expansion of the electrode assembly and the compaction of the lithium-supplementing apparatus, the lithium-supplementing apparatus cannot cause damage to the electrode assembly, so as to ensure the normal work of the battery cell.

In some possible implementations, the thickness of the lithium-supplementing agent is 0.001 mm to 4.9 mm.

A large number of experiments prove that by setting the thickness of the lithium-supplementing agent to 0.001 mm to 4.9 mm, the lithium-supplementing agent and the conductive assembly can be easily combined together, thus effectively reducing the process difficulty.

In some possible implementations, the connecting element includes a terminal connecting part and a lead-out part connected to each other, the terminal connecting part is electrically connected to the lithium-supplementing electrode terminal, an end of the conductive assembly facing the connecting element is formed with an accommodating space, and the lead-out part is arranged in the accommodating space.

In the above technical solution, the lead-out part of the connecting element is arranged in the accommodating space of the conductive assembly, so that the connection area between the connecting element and the conductive assembly is greatly increased, and the reliability of connection between the connecting element and the lithium-supplementing apparatus is greatly improved.

In some possible implementations, in a width direction of the first wall, the terminal connecting part is arranged at a middle position of the first wall.

In the above technical solution, the terminal connecting part of the connecting element is arranged at the middle position of the first wall. On the one hand, the connecting element can achieve the purpose of electrically connecting the lithium-supplementing apparatus with the lithium-supplementing electrode terminal with the shortest size, thus effectively reducing the process cost; and on the other hand, the implementation is simple, and the process difficulty in manufacturing the battery cell is greatly reduced.

In some possible implementations, the first wall is a side surface of the shell.

Compared with a large surface, by arranging the lithium-supplementing electrode terminal on the side surface of the shell, the assembly is easier, and the energy density of the battery can also be ensured.

In some possible implementations, the first wall is an end cover.

In the above technical solution, the lithium-supplementing electrode terminal is arranged on the end cover. Because the end cover is provided with a positive electrode terminal and a negative electrode terminal, there is no need to occupy additional space to arrange the lithium-supplementing electrode terminal, so as to effectively increase the energy density of the battery.

In some possible implementations, the end cover is further provided with a positive electrode terminal and a negative electrode terminal; and the lithium-supplementing electrode terminal is configured to be short-circuited with the positive electrode terminal or the negative electrode terminal when the lithium-supplementing apparatus supplements lithium to the battery cell.

In the above technical solution, on the one hand, when the lithium-supplementing apparatus supplements lithium to the battery cell, that is, when the battery cell needs to be supplemented with lithium, the lithium-supplementing electrode terminal is short-circuited with the positive electrode terminal or the negative electrode terminal to avoid the problem of supplementing lithium to the battery cell by the lithium-supplementing apparatus when there is no need to supplement lithium, thus achieving the purpose of supplementing lithium to the battery cell by the lithium-supplementing apparatus in a controllable mode according to needs; and on the other hand, compared with the positive electrode, lithium ions are relatively easy to embed in the negative electrode. Therefore, when the lithium-supplementing electrode terminal is configured to be short-circuited with the negative electrode terminal, the lithium-supplementing efficiency of the lithium-supplementing apparatus can be significantly increased.

In some possible implementations, in a case where the lithium-supplementing electrode terminal is configured to be short-circuited with the negative electrode terminal when the lithium-supplementing apparatus supplements lithium to the battery cell, the lithium-supplementing electrode terminal is closer to the negative electrode terminal than the positive electrode terminal.

In this way, a connecting line between the lithium-supplementing electrode terminal and the negative electrode terminal may be minimized, the implementation is simple, and the production cost is reduced.

In some possible implementations, the lithium-supplementing apparatus is connected to the two adjacent electrode assemblies through a conductive adhesive.

In the above technical solution, by arranging the conductive adhesive, the connection performance between the electrode assembly and the lithium-supplementing apparatus is ensured, and the connecting element may be in contact with the lithium-supplementing apparatus more easily, thus further ensuring the performance of the connecting element for electrically connecting the lithium-supplementing apparatus with the lithium-supplementing electrode terminal, so as to ensure the lithium-supplementing performance of the lithium-supplementing apparatus. For example, when the electrode assembly expands due to battery charging, after the connecting element and the lithium-supplementing apparatus are compacted, a passage can be formed between the lithium-supplementing apparatus and the connecting element, thus ensuring the lithium-supplementing performance of the lithium-supplementing apparatus.

In some possible implementations, the lithium-supplementing apparatus is sheet-shaped.

In the above technical solution, the lithium-supplementing apparatus is arranged between the two adjacent electrode assemblies, and the lithium-supplementing apparatus is set as a lithium-supplementing sheet, which has little impact on the overall thickness of the battery cell, so the lithium-supplementing apparatus cannot occupy too much internal space of the battery cell, which is conducive to ensuring the energy density of the battery including the battery cell.

According to a second aspect, a battery is provided, including: the battery cell in the above first aspect or each implementation thereof; and a box body configured to accommodate the battery cell.

According to a third aspect, an electrical apparatus is provided, including: the battery in the second aspect, configured to provide electric energy.

### Description of Drawings

In order to illustrate the technical solutions in the embodiments of the present application more clearly, the following briefly introduces the drawings required in the embodiments of the present application. Obviously, the drawings described below are only some embodiments of the present application. For those of ordinary skill in the art, other drawings can also be obtained according to these drawings without any creative effort.
FIG. 1 is a schematic view of a vehicle according to an embodiment of the present application.
FIG. 2 is a schematic structural view of a battery according to an embodiment of the present application.
FIG. 3 is a schematic exploded view of a battery cell according to an embodiment of the present application.
FIG. 4 is a schematic top view of a battery cell according to an embodiment of the present application.
FIG. 5 is a schematic view of a partial cross-sectional structure of the battery cell along A-A' as shown in FIG. 4.
FIG. 6 is an enlarged view of the battery cell at a part B as shown in FIG. 5.
FIG. 7 is a schematic exploded view of an end cover according to an embodiment of the present application.

In the drawings, the drawings are not drawn according to an actual scale.

### Detailed Description

The implementations of the present application are further described in detail below with reference to the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that unless otherwise stated, "a plurality of means two or more; and the orientation or position relationships indicated by the terms "upper", "lower", "left", "right", "inner", "outer" and the like are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second", "third" and the like are only used for descriptive purposes, and cannot be construed as indicating or implying relative importance. "Vertical" is not strictly vertical, but within an allowable range of an error. "Parallel" is not strictly parallel, but within an allowable range of an error.

Orientation words appearing in the following description are all directions shown in the drawings, and do not limit the specific structure of the present application. In the description of the present application, it should also be noted that, unless otherwise expressly specified and defined, the terms "install", "connected" and "connect" should be understood in a broad sense. For example, the connection may be fixed connection, detachable connection, or integrated connection; and the connection may be direct connection, or indirect connection through an intermediate. For those of ordinary skill in the art, the specific meanings of the above terms in the present application may be understood according to specific circumstances.

In the present application, the term "and/or" only describes an association relationship between associated objects and represents that three relationships may exist. For example, A and/or B may represent three situations: only A exists, both A and B exist, and only B exists. In addition, the character "/" in the present application generally means that the associated objects before and after it are in an "or" relationship.

Unless otherwise defined, all technical and scientific terms used in the present application have the same meanings as commonly understood by those skilled in the art of the present application. The terms used in the specification of the present application are only for the purpose of describing specific embodiments, but are not intended to limit the present application. The terms "including" and "having" and any variations thereof in the specification and claims of the present application and in the description of drawings above are intended to cover non-exclusive inclusion. The terms "first", "second", and the like in the specification and claims of the present application or the above drawings are used to distinguish different objects, rather than used to describe specific orders or primary and secondary relationships.

The reference to "embodiments" in the present application means that specific features, structures or characteristics described with reference to embodiments may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described in the present application may be combined with other embodiments.

In the embodiments of the present application, the battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, rectangular, or in other shapes, which is also not limited in the embodiments of the present application. Battery cells are generally divided into three types according to encapsulating manners: cylindrical battery cells, square battery cells and pouch cells, which are also not limited in the embodiments of the present application.

The battery mentioned in the embodiments of the present application refers to a single physical module including one or a plurality of battery cells to provide a higher voltage and capacity. For example, the battery mentioned in the present application may include a battery module, a battery pack, or the like. The battery generally includes a box body for encapsulating one or a plurality of battery cells. The box body can prevent liquids or other foreign matters from affecting the charging or discharging of the battery cell.

The battery cell may include an electrode assembly and an electrolyte solution, and the electrode assembly is composed of a positive electrode plate, a negative electrode plate and a separator. The battery cell works mainly relying on the movement of metal ions between the positive electrode plate and the negative electrode plate. The positive electrode plate includes a positive electrode current collector and a positive electrode active material layer, and the positive electrode active material layer is coated on a surface of the positive electrode current collector. The current collector not coated with the positive electrode active material layer protrudes from the current collector coated with the positive electrode active material layer, and the current collector not coated with the positive electrode active material layer serves as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer, and the negative electrode active material layer is coated on a surface of the negative electrode current collector. The current collector not coated with the negative electrode active material layer protrudes from the current collector coated with the negative electrode active material layer, and the current collector not coated with the negative electrode active material layer serves as a negative tab. The material of the negative electrode current collector may be copper, and the negative electrode active material may be graphite, carbon, silicon, or the like. In order to ensure that no fusing occurs when a heavy current passes, there are a plurality of positive tabs which are laminated together, and there are a plurality of negative tabs which are laminated together. The material of the separator may be polypropylene (PP), polyethylene (PE), or the like. In addition, the electrode assembly may be of a wound structure or a laminated structure, which is not limited in the embodiments of the present application.

The development of the battery technology needs to consider many design factors at the same time, such as energy density, cycle life, and other performance parameters.

The common problem of batteries, such as lithium-ion batteries, is that during the first charging process, a large amount of lithium ions released from the positive electrode will be consumed to form a solid electrolyte interphase (SEI) film on the surface of the negative electrode. During the first charging process, the irreversible consumption of lithium ions in the positive electrode usually exceeds 10%, resulting in lower charging and discharging efficiency in the first cycle, which may only be 50% to 77%, thus reducing the energy density of the battery. On the other hand, the battery will consume active lithium continuously during normal use, thus greatly shortening the service life of the battery.

In view of this, an embodiment of the present application provides a battery cell which can effectively solve the above problems. The battery cell includes at least two electrode assemblies, a lithium-supplementing apparatus, a shell and a connecting element, where the lithium-supplementing apparatus is arranged between two adjacent electrode assemblies in the at least two electrode assemblies, the shell includes a first wall, the first wall is provided with a lithium-supplementing electrode terminal, and the connecting element is configured to electrically connect the lithium-supplementing apparatus with the lithium-supplementing electrode terminal. By arranging the lithium-supplementing apparatus, the lithium-supplementing apparatus can not only supplement the loss of active lithium during the use of the battery including the battery cell to prolong the service life of the battery, but also supplement the loss of active lithium during the first charging process of the battery to increase the energy density of the battery. Further, in the embodiment of the present application, the lithium-supplementing apparatus and the lithium-supplementing electrode terminal are electrically connected through the connecting element to achieve the purpose of supplementing lithium by the lithium-supplementing apparatus. The implementation is simple, and the process complexity is effectively reduced.

The technical solutions described in the embodiments of the present application are all applicable to a variety of electrical devices using batteries.

The electrical devices may be vehicles, mobile phones, portable devices, laptops, ships, spacecrafts, electric toys, electric tools, and the like. The vehicle may be a fuel vehicle, a gas vehicle or a new energy vehicle. The new energy vehicle may be an all-electric vehicle, a hybrid electric vehicle, an extended-range electric vehicle, or the like. The spacecrafts include airplanes, rockets, space shuttles, spaceships, and the like. The electric toys include fixed or mobile electric toys, such as game consoles, electric vehicle toys, electric ship toys and electric airplane toys. The electric tools include metal cutting electric tools, grinding electric tools, assembly electric tools and railway electric tools, such as electric drills, electric grinders, electric wrenches, electric screwdrivers, electric hammers, electric impact drills, concrete vibrators and electric planers. The above electrical devices are not specially limited in the embodiments of the present application.

For the convenience of illustration, the following embodiments are illustrated with the electrical device being a vehicle as an example.

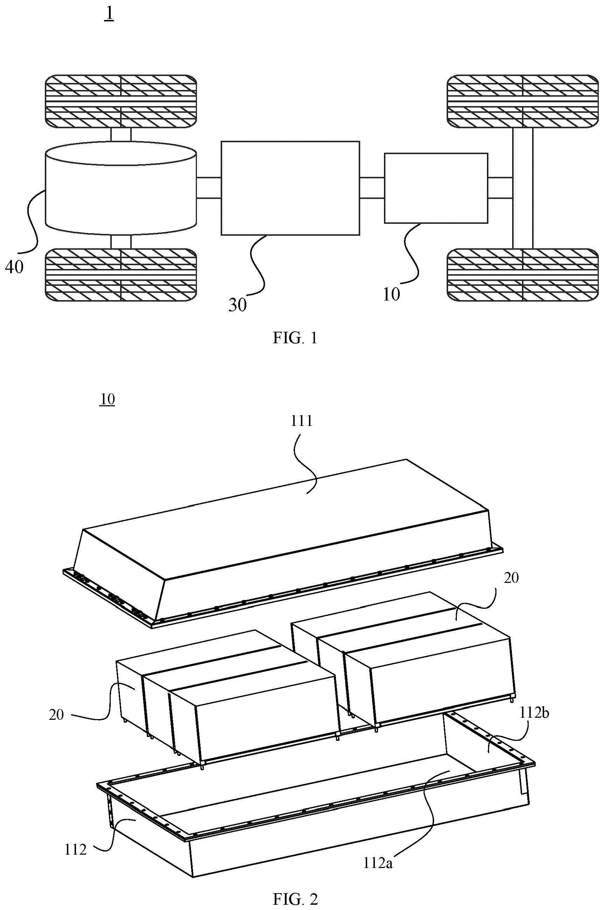

For example, FIG. 1 shows a schematic structural view of a vehicle 1 according to an embodiment of the present application. The vehicle 1 may be a fuel vehicle, a gas vehicle or a new energy vehicle, and the new energy vehicle may be an all-electric vehicle, a hybrid electric vehicle, an extended-range electric vehicle, or the like. A motor 40, a controller 30 and a battery 10 may be arranged in the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1. As an example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can serve not only as an operating power source for the vehicle 1, but also as a driving power source for the vehicle 1, so as to replace or partially replace fuel or natural gas to provide driving power for the vehicle 1.

In order to meet different power usage requirements, the battery may include a plurality of battery cells. The plurality of battery cells may be in series connection, parallel connection or series-parallel connection, and the series-parallel connection refers to a combination of series connection and parallel connection. The battery may also be referred to as a battery pack. Optionally, first, a plurality of battery cells may be in series connection, parallel connection or series-parallel connection to form a battery module, and then, a plurality of battery modules may be in series connection, parallel connection or series-parallel connection to form a battery. In other words, a plurality of battery cells may directly form a battery, or may first form a battery module, and then, the battery modules form a battery.

For example, FIG. 2 shows a schematic structural view of a battery 10 according to an embodiment of the present application. The battery 10 may include a plurality of battery cells 20. The battery 10 may further include a box body (or a cover body), the inside of the box body is of a hollow structure, and the plurality of battery cells 10 are accommodated in the box body. As shown in FIG. 2, the box body may include two parts, which are referred to as a first part 111 and a second part 112 respectively, and the first part 111 and the second part 112 are fastened together. The shapes of the first part 111 and the second part 112 may be determined according to the combined shape of the plurality of battery cells 20, and the first part 111 and the second part 112 may both have an opening. For example, both the first part 111 and the second part 112 may be hollow rectangular solids and each has only one surface being an open surface, the opening of the first part 111 and the opening of the second part 112 are arranged opposite to each other, and the first part 111 and the second part 112 are fastened to each other to form a box body having a closed cavity. The box body may include a bottom plate 112a, side plates 112b and beams. The plurality of battery cells 20 are assembled in parallel, in series or in series and parallel, and then placed in the box body formed by fastening the first part 111 with the second part 112 together.

Optionally, the battery 10 may further include other structures, which will not be repeated here. For example, the battery 10 may further include a bus component, and the bus component is configured to achieve electrical connection between the plurality of battery cells 20, such as parallel connection, series connection or series-parallel connection. Specifically, the bus component may achieve electrical connection between the battery cells 20 by connecting electrode terminals of the battery cells 20. Further, the bus component may be fixed to the electrode terminal of the battery cell 20 by welding. The electric energy of the plurality of battery cells 20 may be further led out through a conductive mechanism penetrating through the box body. Optionally, the conductive mechanism may also belong to the bus component.

According to different power requirements, the number of the battery cells 20 may be set to any value. The plurality of battery cells 20 may be in series connection, parallel connection or series-parallel connection to achieve a larger capacity or power.

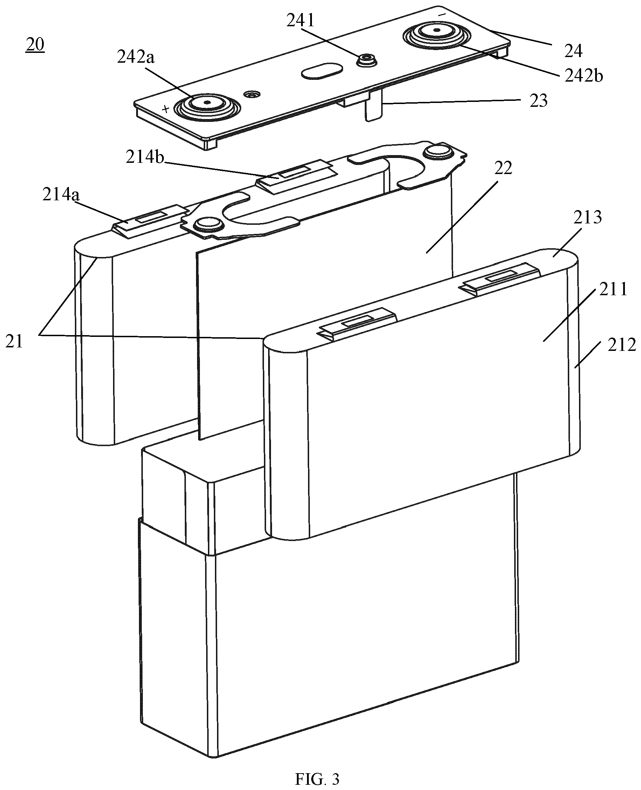

FIG. 3 is a schematic structural view of a battery cell 20 according to an embodiment of the present application. The battery cell 20 may include at least two electrode assemblies 21, a lithium-supplementing apparatus 22, a shell and a connecting element 23. The lithium-supplementing apparatus 22 is arranged between two adjacent electrode assemblies 21 in the at least two electrode assemblies 21, the shell is configured to accommodate the at least two electrode assemblies 21, the shell includes a first wall, the first wall is provided with a lithium-supplementing electrode terminal 241, and the connecting element 23 is configured to electrically connect the lithium-supplementing apparatus 22 with the lithium-supplementing electrode terminal 241.

In the embodiment of the present application, the battery cell 20 includes the lithium-supplementing apparatus 22, thus the lithium-supplementing apparatus 22 can not only supplement the loss of active lithium during the use of the battery including the battery cell 20 to prolong the service life of the battery, but also supplement the loss of active lithium during the first charging process of the battery to increase the energy density of the battery. Further, in the embodiment of the present application, the lithium-supplementing apparatus 22 and the lithium-supplementing electrode terminal 241 are electrically connected through the connecting element 23 to achieve the purpose of supplementing lithium by the lithium-supplementing apparatus 22. The implementation is simple, and the process complexity is effectively reduced.

Optionally, as shown in FIG. 3, the connecting element 23 may be "7"-shaped. Alternatively, the connecting element 23 may also be "L"-shaped, straight, and the like.

Optionally, the material of the connecting element 23 may be aluminum, copper, and the like.

Optionally, the connecting element 23 may electrically connect the lithium-supplementing apparatus 22 with the lithium-supplementing electrode terminal 241 by welding.

Alternatively, the lithium-supplementing apparatus 22 may be connected to the two adjacent electrode assemblies 21 through a conductive adhesive. In this way, the connecting element 23 may be in contact with the conductive adhesive, so as to achieve the purpose of electrically connecting the lithium-supplementing apparatus 22 with the lithium-supplementing electrode terminal 241.

In a case where the lithium-supplementing apparatus 22 is connected to the two adjacent electrode assemblies 21 through the conductive adhesive, when the electrode assembly 21 expands, the connecting element 23 and the conductive adhesive may be compacted to achieve a passage between the connecting element 23 and the lithium-supplementing apparatus 22, thus achieving the purpose of supplementing lithium by the lithium-supplementing apparatus 22.

Compared with other manners such as welding to achieve the passage between the connecting element 23 and the lithium-supplementing apparatus 22, the expansion manner can effectively reduce the process cost.

In the above technical solution, by arranging the conductive adhesive, the connection performance between the electrode assembly 21 and the lithium-supplementing apparatus 22 is ensured, and the connecting element 23 may be in contact with the lithium-supplementing apparatus 22 more easily, thus further ensuring the performance of the connecting element 23 for electrically connecting the lithium-supplementing apparatus 22 with the lithium-supplementing electrode terminal 241, so as to ensure the lithium-supplementing performance of the lithium-supplementing apparatus 22. For example, when the electrode assembly expands, after the connecting element 23 and the lithium-supplementing apparatus 22 are squeezed, a passage can be formed between the lithium-supplementing apparatus 22 and the connecting element 23, thus ensuring the lithium-supplementing performance of the lithium-supplementing apparatus 22.

In some embodiments, referring to FIG. 3 again, a surface of each of the at least two electrode assemblies 21 may include a plane part 211, and the plane parts 211 of the two adjacent electrode assemblies 21 are opposite and connected, where the lithium-supplementing apparatus 22 and at least a part of the connecting element 23 are arranged between the plane parts 211 of the two adjacent electrode assemblies 21.

In this case, the battery cell 20 may be a square battery cell, such as a blade battery cell. By setting the battery cell 20 as a blade battery cell, the energy density of the battery can be increased within the limited space of the battery.

In the above technical solution, on the one hand, the electrode assembly 21 includes the plane part 211, better contact can be formed between planes, and the space of the battery cell 20 can also be better utilized, thus increasing the energy density of the battery; and on the other hand, the lithium-supplementing apparatus 22 and at least a part of the connecting element 23 are arranged between the plane parts 211 of the two adjacent electrode assemblies 21, thus increasing the contact area between the lithium-supplementing apparatus 22 as well as the connecting element 23 and the electrode assembly 21, and improving the lithium-supplementing effect of the lithium-supplementing apparatus 22. In addition, when the electrode assembly 21 expands, the electrode assembly 21 can more easily compact the lithium-supplementing apparatus 22 and the connecting element 23.

The plane part 211 may be a side surface of the electrode assembly 21. For example, the plane part 211 may be a side surface with a minimum area in the electrode assembly 21.

For another example, considering that the expansion force of a side surface with a maximum area during the expansion of the electrode assembly 21 is maximum, the plane part 211 may be the side surface with the maximum area in the electrode assembly 21 as shown in FIG. 3. In this technical solution, the lithium-supplementing apparatus 22 and at least a part of the connecting element 23 are arranged on the side surface with the maximum area in the electrode assembly 21. On the one hand, the contact area between the lithium-supplementing apparatus 22 as well as the connecting element 23 and the electrode assembly 21 can be further increased, thus improving the lithium-supplementing effect of the lithium-supplementing apparatus 22; and on the other hand, because the expansion force of the side surface with the maximum area during the expansion of the electrode assembly 21 is maximum, when the electrode assembly 21 expands, the problem of failure to supplement lithium by the lithium-supplementing apparatus 22 because a passage is not formed between the lithium-supplementing apparatus 22 and the connecting element 23 due to the fact that the lithium-supplementing apparatus 22 and the connecting element 23 are not compacted caused by an insufficient expansion force between the two adjacent electrode assemblies 21 can be avoided.

In a case where the lithium-supplementing apparatus 22 and at least a part of the connecting element 23 are arranged between the plane parts 211 of the two adjacent electrode assemblies 21, the lithium-supplementing apparatus 22 can be arranged between part of the plane parts 211 of the two adjacent electrode assemblies 21, as long as the connecting element 23 can electrically connect the lithium-supplementing apparatus 22 with the lithium-supplementing electrode terminal 241. In this way, the cost of the lithium-supplementing apparatus 22 can be reduced.

Alternatively, referring to FIG. 3 again, the lithium-supplementing apparatus 22 can cover the plane part 211, that is, the lithium-supplementing apparatus 22 can cover the entire plane part 211. At this time, the size of the lithium-supplementing apparatus 22 can reach the maximum. In this technical solution, the lithium-supplementing apparatus 22 covers the plane part 211, and at this time, the size of the lithium-supplementing apparatus 22 can reach the maximum, thus effectively improving the lithium-supplementing effect of the lithium-supplementing apparatus 22, and avoiding the problem of loss of the lithium-supplementing ability due to faults of the lithium-supplementing apparatus 22 in the lithium-supplementing process.

In another embodiment, the surface of each of the at least two electrode assemblies 21 may include a curved surface part 212. In this case, the battery cell 20 may be a cylindrical battery cell. The lithium-supplementing apparatus 22 and the connecting element 23 may be arranged between the curved surface parts 212 of the two adjacent electrode assemblies 21.

Alternatively, as shown in FIG. 3, the surface of each of the at least two electrode assemblies 21 may not only include a plane part 211, but also include a curved surface part 212, and the plane part 211 is connected to the curved surface part 212.

In some embodiments, the lithium-supplementing apparatus 22 may be sheet-shaped, that is, the lithium-supplementing apparatus 22 may be a lithium-supplementing sheet. That is to say, along the width direction of the electrode assembly 21, the size of the lithium-supplementing apparatus 22 is thinner.

In this technical solution, the lithium-supplementing apparatus 22 is arranged between the two adjacent electrode assemblies 21, and the lithium-supplementing apparatus 22 is set as a lithium-supplementing sheet, which has little impact on the overall thickness of the battery cell 20, so the lithium-supplementing apparatus 22 cannot occupy too much internal space of the battery cell 20, which is conducive to ensuring the energy density of the battery including the battery cell 20.

Alternatively, the lithium-supplementing apparatus 22 may be block-shaped, that is, the lithium-supplementing apparatus 22 may be a lithium-supplementing block. The lithium-supplementing block has a certain thickness. Generally, the thicker the lithium-supplementing apparatus 22, the better the lithium-supplementing effect of the lithium-supplementing apparatus 22. That is, by setting the lithium-supplementing apparatus 22 as the lithium-supplementing block, the lithium-supplementing ability of the lithium-supplementing apparatus 22 can be ensured, and the lithium-supplementing effect of the lithium-supplementing apparatus 22 is greatly improved.

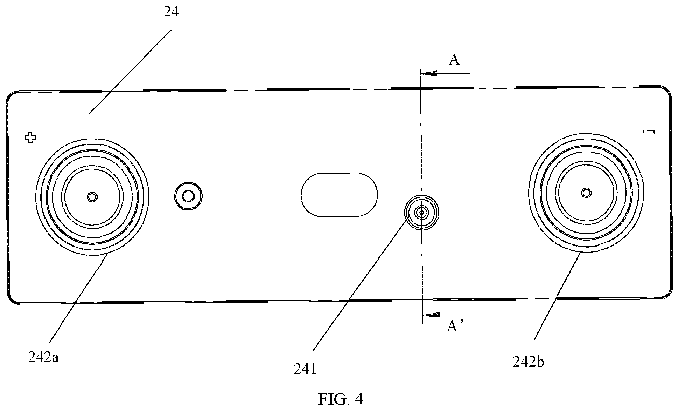

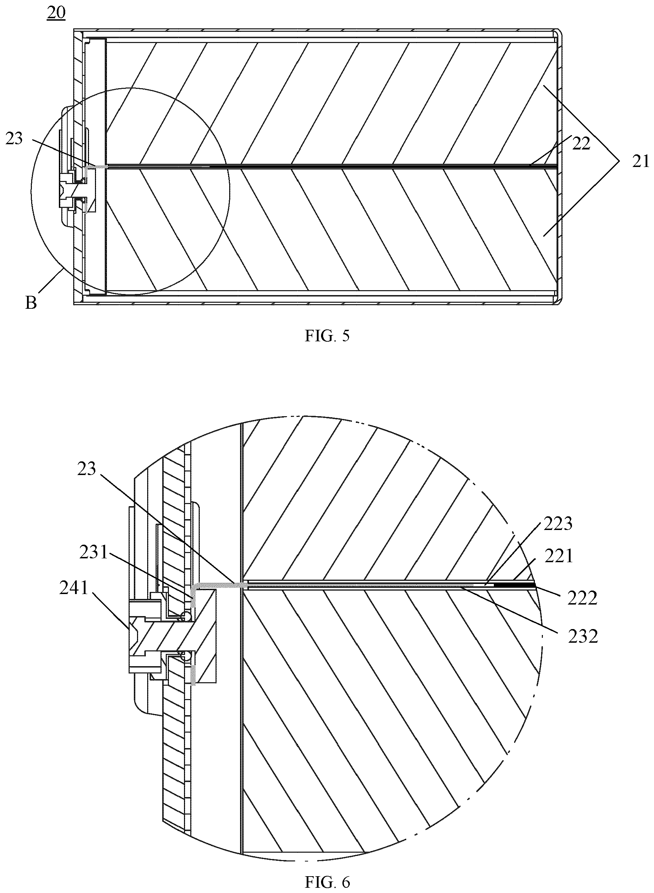

FIG. 4 is a schematic top view of the battery cell 20. FIG. 5 is a schematic view of a partial cross-sectional structure of the battery cell 20 along A-A' as shown in FIG. 4. FIG. 6 is an enlarged view of the battery cell 20 at a part B as shown in FIG. 5.

In some embodiments, as shown in FIG. 6, the lithium-supplementing apparatus 22 may include a conductive assembly 221 and a lithium-supplementing agent 222, and the lithium-supplementing agent 222 is arranged on an inner side of the conductive assembly 221. At this time, the connecting element 23 may be configured to electrically connect the conductive assembly 221 with the lithium-supplementing electrode terminal 241.

In traditional battery cells, after electrode assemblies are wound, in order to prevent the damage to the electrode assemblies caused by materials such as metal wires, such as puncturing the electrode assemblies, the surfaces where two adjacent electrode assemblies are in contact are generally provided with protective adhesives, such as blue glue, to protect the electrode assemblies.

In the embodiment of the present application, the lithium-supplementing apparatus 22 is arranged between the two adjacent electrode assemblies 21, and the conductive assembly 221 is arranged on the outermost side of the lithium-supplementing apparatus 22. Therefore, the conductive assembly 221 can replace the protective adhesive on the surface of the traditional electrode assembly, which can not only reduce the cost of the battery cell 20, but also reduce the size of the battery cell 20 along the width direction of the electrode assembly 21. Further, the conductive assembly 221 can provide an electronic channel for the lithium-supplementing apparatus 22.

Optionally, the lithium-supplementing agent 222 can be combined with the conductive assembly 221 by electroplating, mechanical rolling, and other methods.

The material of the conductive assembly 221 may be a metal, such as one or more of copper, aluminum, nickel, iron, and alloys thereof.

Alternatively, considering that the hardness of a metal material is generally higher, if the material of the conductive assembly 221 is a metal, when the electrode assembly 21 expands, the metal is easy to cause damage to the electrode assembly 21, such as crushing the electrode assembly 21. Therefore, the material of the conductive assembly 221 may be plastic cement. For example, a substrate, such as PP, polycarbonate (PC), or the like can be mixed with a conductive mixing agent to form the conductive assembly 221.

In this technical solution, the material of the conductive assembly 221 is the plastic cement. Because the plastic cement is softer and thinner, during the expansion of the electrode assembly 21 and the compaction of the lithium-supplementing apparatus 22, the lithium-supplementing apparatus 22 cannot cause damage to the electrode assembly 21, so as to ensure the normal work of the battery cell 20.

Optionally, the conductive assembly 221 may be sheet-shaped. Alternatively, in a case where the lithium-supplementing apparatus 22 is a lithium-supplementing block, the conductive assembly 221 may be helical. In this technical solution, by using the helical conductive assembly 221, the contact area between the conductive assembly 221 and the lithium-supplementing agent 222 can be increased, thus avoiding the problem of loss of the lithium-supplementing ability of the lithium-supplementing apparatus 22 due to faults in subsequent reactions of the lithium-supplementing agent 222 and the conductive assembly 221 in the lithium-supplementing process.

The lithium-supplementing agent 222 may be lithium powder, a lithium ingot, a lithium sheet, a lithium alloy, or the like. It should be understood that the capacity of active lithium provided by the lithium-supplementing agent 222 is approximately 0.1% to 99% of negative electrode graphite.

The main function of the lithium-supplementing agent 222 is loss of electrons in metallic elemental lithium, so as to form lithium ions. Electrons reach the positive electrode or negative electrode of the battery through the conductive assembly 221, a positive electrode active material or negative electrode active material obtains the electrons to be reduced, and simultaneously, lithium ions can undergo an intercalation reaction at the positive electrode or negative electrode through an ion channel provided by an electrolyte solution, thus achieving the purpose of transferring active lithium from the lithium-supplementing agent 222 to the positive electrode active material or negative electrode active material to effectively ensure the lithium-supplementing effect.

Optionally, the thickness of the lithium-supplementing agent 222 may be 0.001 mm to 4.9 mm. A large number of experiments prove that by setting the thickness of the lithium-supplementing agent 222 to 0.001 mm to 4.9 mm, the lithium-supplementing agent 222 and the conductive assembly 221 can be easily combined together, thus effectively reducing the process difficulty.

In some embodiments, referring to FIG. 6 again, the connecting element 23 may include a terminal connecting part 231 and a lead-out part 232 connected to each other. The terminal connecting part 231 is electrically connected to the lithium-supplementing electrode terminal 241, an end of the conductive assembly 221 facing the connecting element is formed with an accommodating space 223, and the lead-out part 232 is arranged in the accommodating space 223.

That is to say, the terminal connecting part 231 is arranged on the first wall, and the lead-out part 232 is arranged between the two adjacent electrode assemblies 21. When the electrode assembly 21 expands, the compaction of the connecting element 23 and the lithium-supplementing apparatus 22 is actually the compaction of the lead-out part 232 and the lithium-supplementing apparatus 22.

In this technical solution, the lead-out part 232 of the connecting element 23 is arranged in the accommodating space 223 of the conductive assembly 221, so that the connection area between the connecting element 23 and the conductive assembly 221 is greatly increased, and the reliability of connection between the connecting element 23 and the lithium-supplementing apparatus 22 is greatly improved.

The lead-out part 232 of the connecting element 23 is arranged between the two adjacent electrode assemblies 21, and the terminal connecting part 231 is connected to the lead-out part 231. Therefore, in the embodiment of the present application, in a width direction of the first wall, the terminal connecting part 231 may be arranged at a middle position of the first wall.

The terminal connecting part 231 of the connecting element 23 is arranged at the middle position of the first wall. On the one hand, when the electrode assembly 21 expands, the connecting element 23 can achieve the purpose of being compacted by the electrode assembly 21 with the shortest size to connect with the lithium-supplementing apparatus 22, thus effectively reducing the process cost; and on the other hand, the implementation is simple, and the process difficulty in manufacturing the battery cell 20 is greatly reduced.

In a possible embodiment, the above-mentioned first wall may be a side surface of the shell. Compared with a large surface, by arranging the lithium-supplementing electrode terminal 241 on the side surface of the shell, the assembly is easier, and the energy density of the battery can also be ensured.

In another possible embodiment, as shown in FIG. 3 to FIG. 7, the first wall may be an end cover 24.

Optionally, the material of the end cover 24 may be a metal material, such as an aluminum material, a steel material, or the like.

When the battery cell 20 is a cylindrical battery cell, the end cover 24 may be circular; and when the battery cell 20 is a square battery cell, the end cover 24 may be polygonal, such as a rectangle shown in FIG. 3.

In the above technical solution, the lithium-supplementing electrode terminal 241 is arranged on the end cover 24. Because the end cover 24 is provided with a positive electrode terminal and a negative electrode terminal, there is no need to occupy additional space to arrange the lithium-supplementing electrode terminal 241, so as to effectively increase the energy density of the battery.

Further, in addition to the lithium-supplementing electrode terminal 241 and the connecting element 23, as shown in FIG. 3, FIG. 4 and FIG. 7, the end cover 24 is further provided with a positive electrode terminal 242a and a negative electrode terminal 242b.

Referring to FIG. 3, each electrode assembly 21 has a first tab 214a and a second tab 214b, and the polarity of the first tab 214a is opposite to the polarity of the second tab 214b. For example, when the first tab 214a is a positive tab, the second tab 214b is a negative tab. The first tab 214a of the electrode assembly 21 is connected to an electrode terminal through a connection member, and the second tab 214b of the electrode assembly 21 is connected to another electrode terminal through another connection member. For example, the positive electrode terminal 242a is connected to a positive tab through a connection member, and the negative electrode terminal 242b is connected to a negative tab through another connection member.

In a case that active lithium of the battery cell 20 is sufficient and there is no need to supplement lithium, the lithium-supplementing apparatus 22 may still supplement lithium to the battery cell 20, resulting in resource waste. In order to avoid this situation, in the embodiment of the present application, in a case that lithium needs to be supplemented, the lithium-supplementing apparatus 22 can supplement lithium to the battery cell 20.

In a possible implementation, the lithium-supplementing electrode terminal 241 may be configured to be short-circuited with the positive electrode terminal 242a or the negative electrode terminal 242b when the lithium-supplementing apparatus 22 supplements lithium to the battery cell 20.

If active lithium of the positive electrode is insufficient, the lithium-supplementing electrode terminal 241 can be short-circuited with the positive electrode terminal 242a; and if active lithium of the negative electrode is insufficient, the lithium-supplementing electrode terminal 241 can be short-circuited with the negative electrode terminal 242b.

Alternatively, due to the continuous movement of active lithium in the electrolyte solution, whether active lithium of the positive electrode is insufficient or active lithium of the negative electrode is insufficient, the lithium-supplementing electrode terminal 241 may be configured to be short-circuited with a fixed electrode terminal. For example, the lithium-supplementing electrode terminal 241 may be configured to be short-circuited with the negative electrode terminal 242b.

Compared with the positive electrode, active lithium is relatively easy to embed in the negative electrode. Therefore, when the lithium-supplementing electrode terminal 241 is configured to be short-circuited with the negative electrode terminal 242b, the lithium-supplementing efficiency of the lithium-supplementing apparatus 22 can be significantly increased. On the other hand, when the lithium-supplementing apparatus 22 supplements lithium to the battery cell 20, that is, when the battery cell 20 needs to be supplemented with lithium, the lithium-supplementing electrode terminal 241 is short-circuited with the negative electrode terminal 242b to avoid the problem of resource waste caused by supplementing lithium to the battery cell 20 by the lithium-supplementing apparatus 22 when there is no need to supplement lithium, thus achieving the purpose of supplementing lithium to the battery cell 20 by the lithium-supplementing apparatus 22 in a controllable mode according to needs.

In a case where the lithium-supplementing electrode terminal 241 is configured to be short-circuited with the negative electrode terminal 242b when the lithium-supplementing apparatus 22 supplements lithium to the battery cell 20, the lithium-supplementing electrode terminal 241 is closer to the negative electrode terminal 242b than the positive electrode terminal 242a. In this way, a connecting line between the lithium-supplementing electrode terminal 241 and the negative electrode terminal 242b may be minimized, the implementation is simple, and the production cost is reduced.

In another possible implementation, when lithium needs to be supplemented, the embodiment of the present application can achieve the purpose of supplementing lithium to the battery cell 20 by the lithium-supplementing apparatus 22 through an external control circuit.

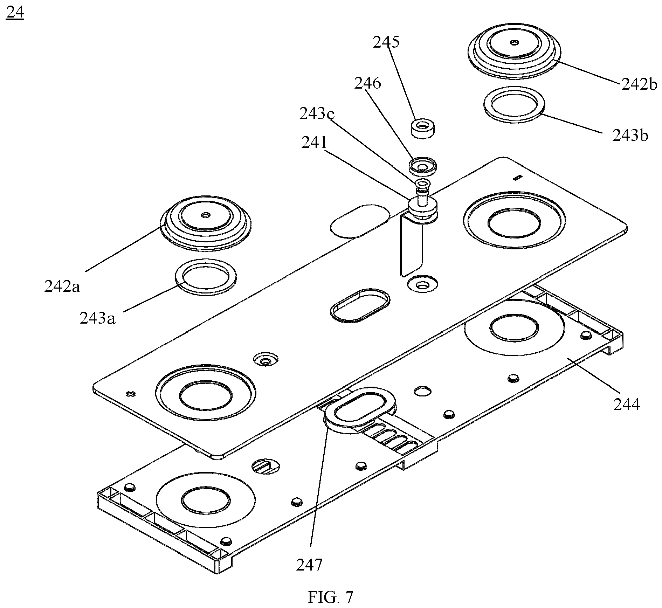

Further, referring to FIG. 7, the end cover 24 may further include a first sealing ring 243a, a second sealing ring 243b and a third sealing ring 243c. The first sealing ring 243a is configured to form a seal between the positive electrode terminal 242a and the end cover 24, the second sealing ring 243b is configured to form a seal between the negative electrode terminal 242b and the end cover 24, and the third sealing ring 243c is configured to form a seal between the lithium-supplementing electrode terminal 241 and the end cover 24. For example, the first sealing ring 243a, the second sealing ring 243b and the third sealing ring 243c may be annular.

The end cover 24 may further include a lower plastic cement 244 which is arranged on a side of the end cover 24 facing the electrode assembly 21 and is configured to separate the end cover 24 from the at least two electrode assemblies 21.

The end cover 24 may further include a third riveting block 245 configured to fix the lithium-supplementing electrode terminal 241 protruding from the end cover 24. In addition, the end cover 24 may further include a third upper plastic cement 246 configured to isolate the end cover 24 from the third riveting block 245.

In addition to the above-mentioned members, a pressure relief mechanism 247 may also be arranged on the end cover 24. The pressure relief mechanism 247 is actuated to relieve the internal pressure or temperature when the internal pressure or temperature of the battery cell 20 reaches a threshold. The threshold design varies according to different design requirements. The threshold may depend on the material of one or a plurality of the positive electrode plate, the negative electrode plate, the electrolyte solution and the separator in the battery cell 20. The pressure relief mechanism 247 may take the form of an explosion-proof valve, a gas valve, a pressure relief valve, a safety valve, or the like, and may specifically adopt a pressure-sensitive or temperature-sensitive element or structure. That is, when the internal pressure or temperature of the battery cell 20 reaches a predetermined threshold, the pressure relief mechanism 247 performs an action, or a weak structure arranged in the pressure relief mechanism 247 is damaged, so as to form an opening or a channel for relieving the internal pressure or temperature.

The term "actuate" referred to in the present application means that the pressure relief mechanism 247 performs an action or is activated to a certain state, so that the internal pressure and temperature of the battery cell 20 can be relieved. The actions generated by the pressure relief mechanism 247 may include, but are not limited to: at least a part of the pressure relief mechanism 247 being broken, crushed, torn or opened, and the like. When the pressure relief mechanism 247 is actuated, high-temperature and high-pressure substances inside the battery cell 20 are discharged as emissions outwards from the actuated part. In this manner, it is possible to enable the battery cell 20 to undergo pressure relief under a controllable pressure or temperature, thus avoiding the occurrence of potential more serious accidents.

The emissions from the battery cell 20 referred to in the present application include, but are not limited to, an electrolyte solution, dissolved or split positive and negative electrode plates, separator fragments, high-temperature and high-pressure gases generated from reactions, flames, and the like.

An embodiment of the present application further provides a battery, and the battery may include the battery cell 20 in any of the above embodiments. In some embodiments, the battery may further include other structures such as a box body and a bus component, which will not be repeated here.

An embodiment of the present application further provides an electrical apparatus, the electrical apparatus may include the battery in the above embodiment, and the battery is used for providing electric energy to the electrical apparatus.

In some embodiments, the electrical apparatus may be the vehicle 1 in FIG. 1, a ship or a spacecraft.

Finally, it should be noted that the above embodiments are merely used for illustrating rather than limiting the technical solutions of the present application. Although the present application is described in detail with reference to the above embodiments, those of ordinary skill in the art should understand that the technical solutions recorded in the above embodiments can still be modified, or some of the technical features therein can be equivalently substituted. However, such modifications or substitutions do not make the essence of the corresponding technical solutions depart from the spirit and scope of the technical solutions of the embodiments of the present application.

## Claims

1. A battery cell (20), comprising:
at least two electrode assemblies (21);
a lithium-supplementing apparatus (22) arranged between two adjacent electrode assemblies (21) in the at least two electrode assemblies (21);
a shell configured to accommodate the at least two electrode assemblies (21), the shell comprising a first wall, and the first wall being provided with a lithium-supplementing electrode terminal (241); and
a connecting element (23) configured to electrically connect the lithium-supplementing apparatus (22) with the lithium-supplementing electrode terminal (241).

2. The battery cell (20) according to claim 1, wherein a surface of each of the at least two electrode assemblies (21) comprises a plane part (211), and the plane parts (211) of the two adjacent electrode assemblies (21) are opposite and connected; and
the lithium-supplementing apparatus (22) and at least a part of the connecting element (23) are arranged between the plane parts (211) of the two adjacent electrode assemblies (21).

3. The battery cell (20) according to claim 2, wherein the plane part (211) is a side surface with a maximum area in each electrode assembly (21).

4. The battery cell (20) according to claim 2 or 3, wherein the lithium-supplementing apparatus (22) covers the plane part (211).

5. The battery cell (20) according to any one of claims 1 to 4, wherein the lithium-supplementing apparatus (22) comprises a conductive assembly (221) and a lithium-supplementing agent (222), and the lithium-supplementing agent (222) is arranged on an inner side of the conductive assembly (221); and
the connecting element (23) is configured to electrically connect the conductive assembly (221) with the lithium-supplementing electrode terminal (241).

6. The battery cell (20) according to claim 5, wherein a material of the conductive assembly (221) is plastic cement.

7. The battery cell (20) according to claim 5 or 6, wherein thickness of the lithium-supplementing agent (222) is 0.001 mm to 4.9 mm.

8. The battery cell (20) according to any one of claims 5 to 7, wherein the connecting element (23) comprises a terminal connecting part (231) and a lead-out part (232) connected to each other, the terminal connecting part (231) is electrically connected to the lithium-supplementing electrode terminal (241), an end of the conductive assembly (221) facing the connecting element (23) is formed with an accommodating space (223), and the lead-out part (232) is arranged in the accommodating space (223).

9. The battery cell (20) according to claim 8, wherein in a width direction of the first wall, the terminal connecting part (231) is arranged at a middle position of the first wall.

10. The battery cell (20) according to any one of claims 1 to 9, wherein the first wall is a side surface of the shell.

11. The battery cell (20) according to any one of claims 1 to 9, wherein the first wall is an end cover (24).

12. The battery cell (20) according to claim 11, wherein the end cover (24) is further provided with a positive electrode terminal (242a) and a negative electrode terminal (242b); and
the lithium-supplementing electrode terminal (241) is configured to be short-circuited with the positive electrode terminal (242a) or the negative electrode terminal (242b) when the lithium-supplementing apparatus (22) supplements lithium to the battery cell (20).

13. The battery cell (20) according to claim 12, wherein in a case where the lithium-supplementing electrode terminal (241) is configured to be short-circuited with the negative electrode terminal (242b) when the lithium-supplementing apparatus (22) supplements lithium to the battery cell (20), the lithium-supplementing electrode terminal (241) is closer to the negative electrode terminal (242b) than the positive electrode terminal (242a).

14. The battery cell (20) according to any one of claims 1 to 13, wherein the lithium-supplementing apparatus (22) is connected to the two adjacent electrode assemblies (21) through a conductive adhesive.

15. The battery cell (20) according to any one of claims 1 to 14, wherein the lithium-supplementing apparatus (22) is sheet-shaped.

16. A battery, comprising:
the battery cell (20) according to any one of claims 1 to 15; and
a box body configured to accommodate the battery cell (20).

17. An electrical apparatus, comprising the battery according to claim 16, the battery being configured to provide electric energy.
